# EUROPEAN PATENT APPLICATION

(11) **EP 4 653 081 A1**
(43) Date of publication of application: **26.11.2025**
(21) Application number: 25170392.2
(22) Date of filing: 14.04.2025
(51) Int. Cl.: B01J 19/18

(54) **PREPARATION EQUIPMENT AND PROCESS FOR NYLON SALT SOLUTION**

(30) Priority: 20.05.2024 CN 202410624089
(71) Applicant: Zhejiang NHU Company Ltd., Shaoxing, Zhejiang 312500 (CN); Zhejiang NHU Special Materials Co., Ltd., Shaoxing, Zhejiang 312369 (CN)
(72) Inventor: DU, Weiyuan, Shangyu District Shaoxing, Zhejiang, 312369 (CN); LI, Xueming, Shangyu District Shaoxing, Zhejiang, 312369 (CN); ZHANG, Xiongwei, Shangyu District Shaoxing, Zhejiang, 312369 (CN); WEI, Guanghui, Shangyu District Shaoxing, Zhejiang, 312369 (CN); WU, Liang, Shangyu District Shaoxing, Zhejiang, 312369 (CN); DENG, Hangjun, Shangyu District Shaoxing, Zhejiang, 312369 (CN); ZHOU, Guiyang, Shangyu District Shaoxing, Zhejiang, 312369 (CN)
(74) Representative: Meyer-Dulheuer MD Legal Patentanwälte PartG mbB

(57) **Abstract**

A preparation equipment and a process for a nylon salt solution. The preparation equipment includes a suspension preparation device (10), a first salt formation reactor (16) and a second salt formation reactor (18). The suspension preparation device includes a feeding unit (11), a continuous feeding unit (12), a high-shear pump (13) and a mixing reactor (14), the high-shear pump (13) and the mixing reactor (14) are cyclically connected with and in communication with each other through two connecting pipelines; the second salt formation reactor (18) includes a second diamine feed pipe (181), a third diamine feed pipe (182), a circulation pipeline (184) of the second salt formation reactor and an online near-infrared monitoring equipment (185) located on the circulation pipeline (184) of the second salt formation reactor.

## Description

### CROSS-REFERENCE TO RELATED APPLICATION

The present application claims priority to Chinese patent application No. 202410624089.2, filed on May 20, 2024, and titled "PREPARATION EQUIPMENT AND PROCESS FOR NYLON SALT SOLUTION".

### TECHNICAL FIELD

The present application relates to the field of nylon technology, and in particular, to a preparation equipment and a process for a nylon salt solution.

### BACKGROUND

Polyamide (PA), commonly referred to as Nylon, is a general term for polymers whose repeating units in the macromolecular mainchain contain amide groups (-NH-C=O). It can be obtained by evaporating a salt solution formed from aliphatic dicarboxylic acids and diamines and then heating to perform polymerization, such as a Nylon 66. However, this method requires ensuring a consistent molar balance between dicarboxylic acid and diamine in the salt solution. For example, when Nylon 66 is prepared using adipic acid (AA) and hexamethylenediamine (HMD), an imbalanced molar ratio of AA to HMD will lead to a reduced molecular weight and also affect the dyeability of Nylon fibers.

In an early stage of the industry, batch salt processes were commonly used, where samples were continuously taken and tested to monitor a molar ratio of amine to acid in a salt formation reactor to achieve molar balance. However, batch salt processes are not suitable for large-scale industrial production. Additionally, aliphatic dicarboxylic acids, such as adipic acid powder, have a wide particle size distribution, resulting in a broad range of bulk densities, such as 0.6 g/cm³ to 0.7 g/cm³. Conventional volumetric metering methods exhibit significant errors, which are detrimental to obtaining a salt solution with a consistent molar ratio.

### SUMMARY

In view of the above issues, it is necessary to provide a preparation equipment and a process for a nylon salt solution. The nylon salt solution obtained using the preparation equipment and process achieves a more precise molar ratio of a dicarboxylic acid to a diamine.

A preparation equipment for a nylon salt solution, including: a suspension preparation device, a first salt formation reactor and a second salt formation reactor. The suspension preparation device includes a feeding unit, a continuous feeding unit, a high-shear pump, and a mixing reactor provided with a water inlet pipe, which are sequentially connected with and in communication with each other. The high-shear pump and the mixing reactor are cyclically connected with and in communication with each other through two connecting pipelines. The feeding unit is configured for feeding an aliphatic dicarboxylic acid, and the continuous feeding unit is configured for conveying the aliphatic dicarboxylic acid to the high-shear pump. The aliphatic dicarboxylic acid is capable of circulating with a water between the high-shear pump and the mixing reactor to form an aliphatic dicarboxylic acid suspension. The first salt formation reactor is connected to and in communication with the suspension preparation device. And the first salt formation reactor includes a first diamine feed pipe. The first salt formation reactor is configured for preparing a primary nylon salt solution by reacting the aliphatic dicarboxylic acid suspension with a diamine. The second salt formation reactor is connected to and in communication with the first salt formation reactor. And the second salt formation reactor includes a second diamine feed pipe and a third diamine feed pipe. The second salt formation reactor is configured for preparing a nylon salt solution by reacting the primary nylon salt solution with the diamine. The second salt formation reactor further includes a circulation pipeline of the second salt formation reactor, and the circulation pipeline of the second salt formation reactor is provided with an online near-infrared monitoring equipment. The online near-infrared monitoring equipment is configured for monitoring a molar ratio of the aliphatic dicarboxylic acid to the diamine in the nylon salt solution and controlling a feed amount of the diamine in the third diamine feed pipe based on monitoring results.

In some embodiments, the preparation equipment further includes a suspension storage tank, which is connected to and in communication with the suspension preparation device and the suspension storage tank is configured for storing the aliphatic dicarboxylic acid suspension prepared by the suspension preparation device. The first salt formation reactor is connected to and in communication with the suspension storage tank. Alternatively, the preparation equipment further includes a primary nylon salt storage tank, which is connected to and in communication with the first salt formation reactor, and the primary nylon salt storage tank is configured for storing the primary nylon salt solution prepared by the first salt formation reactor. The second salt formation reactor is connected to and in communication with the primary nylon salt storage tank. Alternatively, the preparation equipment further includes a nylon salt storage tank, which is connected to and in communication with the second salt formation reactor and is configured for storing the nylon salt solution prepared by the second salt formation reactor.

In some embodiments, the number of the suspension preparation device is one or more than two, and each of the suspension preparation device is connected to and in communication with the suspension storage tank.

In some embodiments, the suspension storage tank includes a circulation pipeline of the suspension storage tank, which is configured for circulating the aliphatic dicarboxylic acid suspension in the suspension storage tank. Alternatively, the primary nylon salt storage tank includes a circulation pipeline of the primary nylon salt storage tank , which is configured for circulating the primary nylon salt solution in the primary nylon salt storage tank. Alternatively, the first salt formation reactor includes a circulation pipeline of the first salt formation reactor, which is configured for circulating the primary nylon salt solution in the first salt formation reactor.

In some embodiments, the circulation pipeline of the suspension storage tank is provided with an online densimeter, which is configured for monitoring and feeding back the concentration change of the aliphatic dicarboxylic acid suspension in real time.

In some embodiments, the first salt formation reactor circulating pipeline is provided with a first heat exchanger. Alternatively, the circulation pipeline of the second salt formation reactor is provided with a second heat exchanger.

In some embodiments, the online near-infrared monitoring equipment is a non-contact online near-infrared monitoring equipment.

The present application further provides a preparation process for a nylon salt solution, which is carried out by using the above preparation equipment, including the following steps: introducing the water into the mixing reactor through the water inlet pipe, and starting the high-shear pump to circulate the water between the mixing reactor and the high-shear pump; feeding the aliphatic dicarboxylic acid through the feeding unit, and entering the high-shear pump through the continuous feeding unit to mix with the water, and circulating between the high-shear pump and the mixing reactor to form an aliphatic dicarboxylic acid suspension; transferring the aliphatic dicarboxylic acid suspension to the first salt formation reactor, and adding the diamine into the first salt formation reactor through the first diamine feed pipe to form a primary nylon salt solution, and transferring the primary nylon salt solution to the second salt formation reactor, and adding the diamine into the second salt formation reactor through the second diamine feed pipe and the third diamine feed pipe to form a nylon salt solution. A feed quantity of the diamine of the third diamine feed pipe is regulated by the online near-infrared monitoring equipment on the circulation pipeline of the second salt formation reactor.

In some embodiments, transferring the aliphatic dicarboxylic acid suspension to the first salt formation reactor further includes: transferring the aliphatic dicarboxylic acid suspension prepared by the suspension preparation device to the suspension storage tank, then transferring the aliphatic dicarboxylic acid suspension in the suspension storage tank to the first salt formation reactor. Alternatively, transferring the primary nylon salt solution to the second salt formation reactor further includes: transferring the primary nylon salt solution prepared by the first salt formation reactor to the primary nylon salt storage tank, then transferring the primary nylon salt solution in the primary nylon salt storage tank to the second salt formation reactor. Alternatively, the preparation process further includes: transferring the nylon salt solution prepared by the second salt formation reactor to the nylon salt storage tank.

In some embodiments, the preparation process satisfies at least one of the following conditions: (1) a concentration of the aliphatic dicarboxylic acid suspension is in a range of 35 wt% to 52 wt%; (2) a molar ratio of a dicarboxylic acid to the diamine in the primary nylon salt solution is in a range of 1.5:1 to 3:1, and a concentration of the primary nylon salt solution is in a range of 40 wt% to 62 wt%; (3) a concentration of the nylon salt solution is in a range of 50 wt% to 65 wt%.

Details of one or more embodiments of the present application are presented in the attached drawings and descriptions below. And other features, purposes and advantages of the present application will become apparent from the description, drawings and claims.

### BRIEF DESCRIPTION OF THE DRAWINGS

In order to more clearly explain the technical scheme in the embodiments of the present application or the traditional technology, the following is a brief introduction of the drawings required to be used in the description of the embodiments or the traditional technology. It is obvious that the drawings described below are only some embodiments of the present application. Other drawings can also be obtained from these drawings.
FIG. 1 is a schematic view of a preparation equipment for a nylon salt solution in the present application.
FIG. 2 is a schematic diagram of a non-contact online near-infrared monitoring equipment used in the present application.

Reference signs are as follows: 10 represents a suspension preparation device; 11 represents a feeding unit; 12 represents a continuous feeding unit; 13 represents a high-shear pump; 14 represents a mixing reactor; 15 represents a suspension storage tank; 16 represents a first salt formation reactor; 17 represents a primary nylon salt storage tank; 18 represents a second salt formation reactor; 19 represents a nylon salt storage tank; 131 represents a connecting pipeline; 141 represents a water inlet pipe; 142 represents a first nitrogen gas pipe; 151 represents a circulation pipeline of the suspension storage tank; 152 represents an online densimeter; 161 represents a first diamine feed pipe; 162 represents a second nitrogen gas pipe; 163 represents a circulation pipeline of the first salt formation reactor; 164 represents a first heat exchanger; 171 represents a circulation pipeline of the primary nylon salt storage tank; 172 represents a third nitrogen gas pipe; 181 represents a second diamine feed pipe; 182 represents a third diamine feed pipe; 183 represents a fourth nitrogen gas pipe; 184 represents a circulation pipeline of the second salt formation reactor; 185 represents an online near-infrared monitoring equipment; 186 represents a second heat exchanger; 185a represents a light source; 185b represents a transparent section; 185c represents a receiver; 191 represents a circulation pipeline of the nylon salt storage tank; and 192 represents a fifth nitrogen gas pipe.

### DETAILED DESCRIPTION

The technical solutions in the embodiments of the present application will be clearly and completely described below with reference to the accompanying drawings in the embodiments of the present application. It is obvious that the described embodiments are only a part of the embodiments, but not all of the embodiments. All other embodiments obtained by a person of ordinary skill in the art based on the embodiments of the present application without creative efforts shall fall within the protection scope of the present application.

It should be noted that when the component is referred to as being "mounted to" another component, it may be directly on the other component or may also be an intervening component. When one component is considered to be "disposed on" another component, it may be directly disposed on another component or there may be an intervening component simultaneously. When one component is considered to be "fixed to" another component, it may be directly fixed on another component or there may be an intervening component at the same time.

Unless otherwise defined, all technical and scientific terms used herein have the same meaning as commonly understood by one skilled in the art to which the present application belongs. The terminology used herein in the specification of the present application is for the purpose of describing particular embodiments only and is not intended to be limiting of the present application. As used herein, the terms "or/and" include any and all combinations of one or more of the associated listed items.

A loss-in-weight measurement, that is, weight measurement, is adopted in the related art to solve a problem of accurate quantification in a feeding process of an aliphatic dicarboxylic acid. The metered aliphatic dicarboxylic acid is continuously dispersed in a single continuous stirred tank reactor, and water and a first stream of a diamine are simultaneously introduced to obtain a salt solution with a certain concentration and a certain ratio, and then the salt solution is introduced into a storage tank for temporary storage, or the salt solution is introduced into another continuous stirred tank reactor, and at the same time, a second diamine was introduced into another continuous stirred tank, and then a third diamine was introduced through online pH feedback, so as to obtain a desired salt solution with balanced molar ratio.

However, on one hand, working modes of the loss-in-weight measurement generally include a weight-based feeding mode and a volume-based feeding mode. The weight-based feeding mode refers to that, when a material level in a buffer hopper of a loss-in-weight feeder is relatively high, weight signals can be continuously output to a downstream receiving equipment based on weight changes. However, as the material is gradually decreased, fluctuations in the weight signal or a loss-in-weight signal may occur due to the reduction in material. Therefore, when the material is decreased to a lower quantity, it is necessary to switch to the volume-based feeding mode. Before switching to the volume-based feeding mode, the output frequency of the loss-in-weight signal of the loss-in-weight feeder needs to be fixed. In the volume-based feeding mode, refilling of the buffer hopper of the loss-in-weight feeder can be completed. Although refilling can be accomplished in a relatively short time before switching back to the weight-based feeding mode. But in the volume-based feeding mode, the output frequency of the loss-in-weight signal is fixed, which may result in significant errors and fluctuations in the metering of the aliphatic dicarboxylic acid after switching. This is detrimental to achieving the desired molar ratio of the salt solution. Additionally, the loss-in-weight feeder is typically used for precise metering of small quantities of material per unit time. This makes it difficult to select a suitable loss-in-weight feeder as the production capacity of polyamide increases, or it may require additional investment in expensive replacement costs for the loss-in-weight feeder. Moreover, larger loss-in-weight feeders, due to the longer switching time between the loss-in-weight feeding mode and the volume-based feeding mode, further amplify the metering errors of the aliphatic dicarboxylic acid, which is even more detrimental to obtaining a desired molar ratio of the salt solution. On the other hand, the aliphatic dicarboxylic acid in solid state contains an entrained air. When the aliphatic dicarboxylic acid is directly mixed with the diamine and the water to form the salt solution, an oxygen in the entrained air can oxidize the salt solution, resulting in an undesired color and affecting product quality.

Additionally, the molar ratio of the salt solution can be adjusted by controlling a rate and a flow of the subsequently introduced diamine. For example, in related technologies, a recirculation pipeline is introduced for supplementing the diamine. The recirculation pipeline may include one or more pumps, as well as temperature control devices such as coils, jackets, or devices with heat exchangers, temperature measurement devices, and controllers. Specifically, the temperature control device can regulate the temperature of the nylon salt solution in the recirculation pipeline, thereby preventing the nylon salt solution from boiling or gelling. The recirculation pipeline is required to dilute the high-concentration nylon salt and make it cool to a suitable working environment and temperature (in a range of 25°C to 30°C) for better online pH measurement. Such an approach necessitates additional equipment such as valves, pipelines, heat exchangers, and pumps, resulting in a complex process and increased investment. Furthermore, it requires highly on the working environment for pH, as fluctuations in temperature or concentration can lead to significant measurement errors, thereby affecting an accuracy of the supplementary amount of the diamine based on pH feedback in the related technologies. In addition, due to the dilution of the salt solution, an unnecessary water is introduced, causing significant fluctuations in the concentration of the salt solution, which is also detrimental to subsequent polymerization.

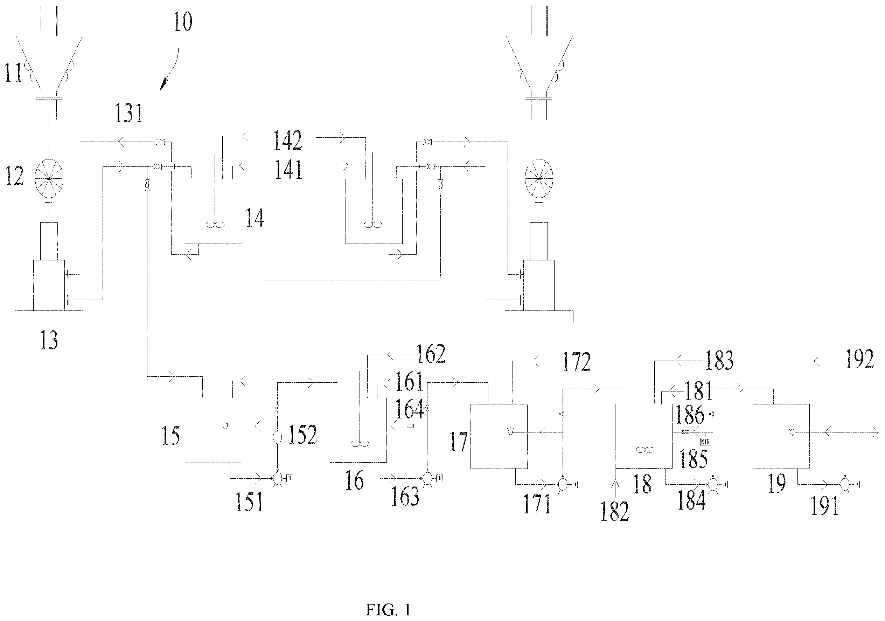

Referring to FIG. 1, the preparation equipment of the nylon salt solution provided by the present application, includes a suspension preparation device for preparing an aliphatic dicarboxylic acid suspension, a first salt formation reactor 16 for preparing a primary nylon salt solution, and a second salt formation reactor 18 for preparing a nylon salt solution, which are sequentially connected to and in communicated with each other.

Furthermore, the preparation equipment may further include a suspension storage tank 15 for storing the aliphatic dicarboxylic acid suspension. The suspension storage tank 15 is connected to and in communication with both the suspension preparation device and the first salt formation reactor 16. In an embodiment, the preparation equipment may further include a primary nylon salt storage tank 17 for storing the primary nylon salt solution. The primary nylon salt storage tank 17 is connected to and in communication with both the first salt formation reactor 16 and the second salt formation reactor 18. In an embodiment, the preparation equipment may further include a nylon salt storage tank 19 for storing the nylon salt solution. The nylon salt storage tank 19 is connected to and in communication with the second salt formation reactor 18.

Among them, the suspension preparation device includes a feeding unit 11, a continuous feeding unit 12, a high-shear pump 13, and a mixing reactor 14. The mixing reactor 14 is further provided with a water inlet pipe 141, which is configured for introducing water into the mixing reactor 14 for preparing the suspension.

In the suspension preparation device, the feeding unit 11, the continuous feeding unit 12, and the high-shear pump 13 are sequentially connected to and in communication with each other. Among them, the feeding unit 11 is configured for feeding the aliphatic dicarboxylic acid, and the continuous feeding unit 12 is configured for conveying the aliphatic dicarboxylic acid to the high-shear pump 13. Additionally, the high-shear pump 13 and the mixing reactor 14 are connected to and in communication with each other through two connecting pipelines 131, allowing the aliphatic dicarboxylic acid and water to circulate between the high-shear pump 13 and the mixing reactor 14, thereby forming the aliphatic dicarboxylic acid suspension.

In some embodiments, the feeding unit 11 is provided with a vibrator, which can assist in quickly completing the feeding of the aliphatic dicarboxylic acid. The continuous feeding unit 12 may be a screw feeder or a rotary feeder.

When using the suspension preparation device of the present application to form the aliphatic dicarboxylic acid suspension, the high-shear pump 13 can generate a slight negative pressure during material circulation, such as when circulating water and the mixture formed by water and the aliphatic dicarboxylic acid. This enables the high-shear pump 13 to create a vacuum suction state, allowing the aliphatic dicarboxylic acid to be rapidly and completely dispersed into the suspension. At the same time, the high-shear pump 13 can atomize water into a fine mist. Consequently, when using the suspension preparation device of the present application to form the aliphatic dicarboxylic acid suspension, it can prevent the aliphatic dicarboxylic acid powder from forming clumps and enable water to quickly come into contact with the aliphatic dicarboxylic acid powder, forming an ideal and homogeneous dispersion.

Additionally, in the present application, the aliphatic dicarboxylic acid is fed directly by weight measurement. For example, the aliphatic dicarboxylic acid is directly purchased in ton bags, with a weight error generally within 0.5%, resulting in minimal error and precise measurement of the feed amount.

Therefore, the present application effectively addresses the issue of feeding errors caused by the use of the loss-in-weight feeder in related technologies, enabling a higher precision in the molar ratio of the dicarboxylic acid to the diamine in the subsequently formed nylon salt solution.

Additionally, the mixing reactor 14 may further be provided with a first nitrogen gas pipe 142, which is configured for introducing nitrogen gas into the mixing reactor 14. Thus, using the suspension preparation device of the present application to prepare the aliphatic dicarboxylic acid suspension, it allows nitrogen to displace the air entrained in the aliphatic dicarboxylic acid feed, thereby reducing a risk of oxidation of the subsequent salt solution.

Specifically, the suspension storage tank 15 is connected to and in communication with the suspension preparation device. The suspension storage tank 15 is configured for storing the aliphatic dicarboxylic acid suspension prepared by the suspension preparation device. It is understood that the connection and communication between the suspension storage tank 15 and the suspension preparation device are not limited. It can be directly connected to and in communication with the mixing reactor 14 via a pipeline, or it can be connected to and in communication with any of the connecting pipelines between the mixing reactor 14 and the high-shear pump 13.

In some embodiments, the suspension storage tank 15 is provided with a circulation pipeline 151 of the suspension storage tank. The circulation pipeline 151 of the suspension storage tank is configured for circulating the aliphatic dicarboxylic acid suspension in the suspension storage tank 15, ensuring that the aliphatic dicarboxylic acid suspension remains in a homogeneous state. The circulation pipeline 151 of the suspension storage tank may include a circulation pump and a spray nozzle. The aliphatic dicarboxylic acid suspension flows through the circulation pump in the pipeline and is sprayed out through the spray nozzle to remix with the aliphatic dicarboxylic acid suspension in the suspension storage tank 15.

Furthermore, the circulation pipeline 151 of the suspension storage tank is further provided with an online densimeter 152. The online densimeter 152 is also monitoring and providing real-time feedback on the concentration changes of the aliphatic dicarboxylic acid suspension, thereby enabling higher precision in the molar ratio of the dicarboxylic acid to the diamine in the subsequently formed nylon salt solution.

In some embodiments, the number of the suspension preparation device is one or more than two, with each of the suspension preparation device connected to and in communication with the suspension storage tank 15. The number of the suspension preparation device is specifically designed according to production capacity requirements, thereby improving efficiency.

Specifically, when the suspension storage tank 15 is omitted, the first salt formation reactor 16 is directly connected to and in communication with the suspension preparation device. When the suspension storage tank 15 is provided, the first salt formation reactor 16 is connected to and in communication with the suspension storage tank 15, and can receive the aliphatic dicarboxylic acid suspension from either the suspension preparation device or the suspension storage tank 15. The first salt formation reactor 16 is further provided with a first diamine feed pipe 161, which is configured for introducing the diamine into the first salt formation reactor 16. The amount of the diamine introduced can be controlled using a flow meter and a regulating valve. In this way, the first salt formation reactor 16 can be configured for preparing the primary nylon salt solution by reacting the aliphatic dicarboxylic acid suspension with the diamine. In some embodiments, the first salt formation reactor 16 is further provided with an agitator, which assists in quickly mixing the aliphatic dicarboxylic acid suspension and the diamine and forming the salt. It is understood that when the first salt formation reactor 16 is connected to and in communication with the suspension storage tank 15, the connection and communication methods are not limited. It can be directly connected to and in communication with the suspension storage tank 15 via a pipeline, or it can be connected to and in communication with the circulation pipeline 151 of the suspension storage tank. When the first salt formation reactor 16 is connected to and in communication with the suspension preparation device, the connection and communication methods are not limited. It can be directly connected to and in communication with the mixing reactor 14 via a pipeline, or it can be connected to and in communication with any of the connecting pipelines between the mixing reactor 14 and the high-shear pump 13.

In some embodiments, the first salt formation reactor 16 may further be provided with a second nitrogen gas pipe 162. The second nitrogen gas pipe 162 is configured for introducing nitrogen gas into the first salt formation reactor 16, thereby displacing the air entrained in the diamine feed during the preparation of the primary nylon salt solution and reducing a risk of oxidation of the salt solution.

In some embodiments, the first salt formation reactor 16 is provided with a circulation pipeline 163 of the first salt formation reactor. The circulation pipeline 163 of the first salt formation reactor is configured for circulating the primary nylon salt solution in the first salt formation reactor. The circulation pipeline 163 of the first salt formation reactor may be provided with a circulation pump. Furthermore, the circulation pipeline 163 of the first salt formation reactor is further provided with a first heat exchanger 164. Thus, when the primary nylon salt solution circulates in the circulation pipeline 163 of the first salt formation reactor, its temperature can be controlled by the first heat exchanger 164.

Specifically, the primary nylon salt storage tank 17 is connected to and in communication with the first salt formation reactor 16, and is configured for storing the primary nylon salt solution prepared by the first salt formation reactor 16. It is understood that the connection and communication methods between the primary nylon salt storage tank 17 and the first salt formation reactor 16 are not limited. It can be directly connected to and in communication with the first salt formation reactor 16 via a pipeline, or it can be connected to and in communication with the circulation pipeline 163 of the first salt formation reactor.

In some embodiments, the primary nylon salt storage tank 17 is provided with a circulation pipeline 171 of the primary nylon salt storage tank, which is configured for circulating the primary nylon salt solution in the primary nylon salt storage tank 17. The circulation pipeline 171 of the primary nylon salt storage tank may include a circulation pump and a spray nozzle. The primary nylon salt solution flows through the circulation pump in the pipeline and is sprayed out through the spray nozzle to remix with the primary nylon salt solution in the primary nylon salt storage tank 17.

In some embodiments, the primary nylon salt storage tank 17 may further be provided with a third nitrogen gas pipe 172. The third nitrogen gas pipe 172 is configured for introducing nitrogen gas into the primary nylon salt storage tank 17, reducing the risk of oxidation of the primary nylon salt solution.

In some embodiments, an online densimeter may also be installed on the circulation pipeline 171 of the primary nylon salt storage tank. The online densimeter is configured for monitoring and providing real-time feedback on the concentration changes of the primary nylon salt solution.

Specifically, when the primary nylon salt storage tank 17 is not provided, the second salt formation reactor 18 is directly connected to and in communication with the first salt formation reactor 16. When the primary nylon salt storage tank 17 is provided, the second salt formation reactor 18 is connected to and in communication with the primary nylon salt storage tank 17. The second salt formation reactor 18 can receive the primary nylon salt solution from either the first salt formation reactor 16 or the primary nylon salt storage tank 17. The second salt formation reactor 18 is provided with a second diamine feed pipe 181 and a third diamine feed pipe 182, which are configured for introducing the diamine into the second salt formation reactor 18. The amount of the diamine introduced through the second diamine feed pipe 181 and the third diamine feed pipe 182 can be controlled using flow meters and regulating valves. Thus, the second salt formation reactor 18 can be configured for preparing the nylon salt solution by reacting the primary nylon salt solution with the diamine.

In some embodiments, the second salt formation reactor 18 may further be provided with a fourth nitrogen gas pipe 183. The fourth nitrogen gas pipe 183 is configured for introducing nitrogen gas into the second salt formation reactor 18, thereby displacing the air entrained in the diamine feed and reducing the risk of oxidation of the salt solution.

More specifically, the second salt formation reactor 18 is further provided with a circulation pipeline 184 of the second salt formation reactor. The circulation pipeline 184 of the second salt formation reactor is provided with an online near-infrared monitoring equipment 185. The online near-infrared monitoring equipment 185 is configured for monitoring the molar ratio of the dicarboxylic acid to the diamine in the nylon salt solution and control the feed amount of the diamine in the third diamine feed pipe 182 based on the monitoring results, thereby obtaining the nylon salt solution with a more precise molar ratio of the dicarboxylic acid to the diamine.

The present application uses the online near-infrared monitoring equipment 185 to monitor the molar ratio of the dicarboxylic acid to the diamine in the nylon salt solution, avoiding the concentration issues caused by adding additional water for sampling. Additionally, compared to temperature-sensitive pH detection, the online near-infrared monitoring equipment 185 can stably measure within a temperature range of -10°C to 10°C, preventing the issue of molar ratio imbalance caused by temperature fluctuations during pH detection.

Furthermore, the online near-infrared monitoring equipment 185 is simple to install and operate, and can simultaneously provide key information such as the amine or carboxyl ratio and the concentration of the salt solution in the nylon salt solution. Unlike online pH detectors or refractometers, it does not require additional bypass loops, heat exchangers, or special pipelines with regulating valves and flow meters, significantly reducing construction and operational costs.

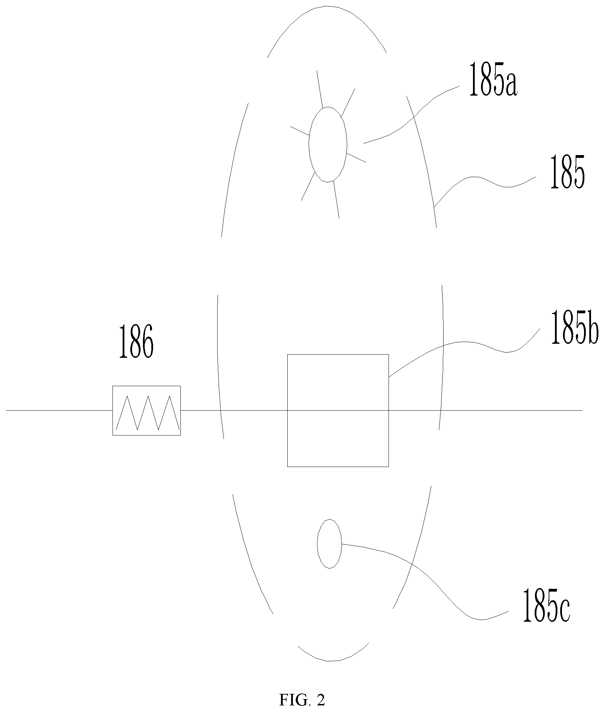

Furthermore, referring to FIG. 2, in some embodiments of the present application, the online near-infrared monitoring equipment 185 is a non-contact online near-infrared monitoring equipment, including a large-spot light source 185a and a receiver 185c. Additionally, the circulation pipeline 184 of the second salt formation reactor is provided with a transparent section 185b. Compared to a contact online near-infrared monitoring equipment, which may introduce testing errors due to bubbles in the nylon salt solution, the non-contact online near-infrared monitoring equipment provides more accurate monitoring results. Moreover, the usage and maintenance costs of the non-contact online near-infrared monitoring equipment are lower than those of the contact online near-infrared monitoring equipment.

In some embodiments, the second salt formation reactor 18 is further provided with an agitator, which assists in quickly mixing and forming the salt between the primary nylon salt solution and the diamine. It is understood that when the second salt formation reactor 18 is connected to and in communication with the first salt formation reactor 16, the connection and communication methods are not limited. It can be directly connected to and in communication with the first salt formation reactor 16 via a pipeline, or it can be connected to and in communication with the circulation pipeline 163 of the first salt formation reactor. When the second salt formation reactor 18 is connected to and in communication with the primary nylon salt storage tank 17, the connection and communication methods are not limited. It can be directly connected to and in communication with the primary nylon salt storage tank 17 via a pipeline, or it can be connected to and in communication with the circulation pipeline 171 of the primary nylon salt storage tank.

In some embodiments, the circulation pipeline 184 of the second salt formation reactor may be provided with a circulation pump. Furthermore, the circulation pipeline 184 of the second salt formation reactor is further provided with a second heat exchanger 186. When the nylon salt solution circulates in the circulation pipeline 184 of the second salt formation reactor, its temperature can be controlled by the second heat exchanger 186.

Specifically, the nylon salt storage tank 19 is connected to and in communication with the second salt formation reactor 18, and is configured for storing the nylon salt solution prepared by the second salt formation reactor 18. It is understood that the connection and communication methods between the nylon salt storage tank 19 and the second salt formation reactor 18 are not limited. It can be directly connected to and in communication with the second salt formation reactor 18 via a pipeline, or it can be connected to and in communication with the circulation pipeline 184 of the second salt formation reactor.

In some embodiments, the nylon salt storage tank 19 is provided with a circulation pipeline 191 of the nylon salt storage tank. The circulation pipeline 191 of the nylon salt storage tank is configured for circulate the nylon salt solution in the nylon salt storage tank 19. The circulation pipeline 191 of nylon salt storage tank may include a circulation pump and a spray nozzle. The nylon salt solution flows through the circulation pump in the pipeline and is sprayed out through the spray nozzle to remix with the nylon salt solution in the nylon salt storage tank 19.

In some embodiments, the nylon salt storage tank 19 may further be provided with a fifth nitrogen gas pipe 192. The fifth nitrogen gas pipe 192 is configured for introducing nitrogen gas into the nylon salt storage tank 19, reducing a risk of oxidation of the salt solution in the nylon salt storage tank 19.

The present application further provides a preparation process for a nylon salt solution, which is carried out by using the above preparation equipment, including the following steps:
introducing the water into the mixing reactor 14 through the water inlet pipe 141, and starting the high-shear pump 13 to circulate the water between the mixing reactor 14 and the high-shear pump 13, which allows the high-shear pump 13 to generate a slight negative pressure; then feeding the aliphatic dicarboxylic acid through the feeding unit 11, and entering the high-shear pump 13 through the continuous feeding unit 12 to mix with the water, and circulating between the high-shear pump 13 and the mixing reactor 14 to form an aliphatic dicarboxylic acid suspension; and transferring the aliphatic dicarboxylic acid suspension to the suspension storage tank 15 or the first salt formation reactor 16.

In some embodiments, after the feeding of the aliphatic dicarboxylic acid is completed, the continuous feeding unit 12 is turned off, and the circulation between the high-shear pump 13 and the mixing reactor 14 is continued. It can form a more homogeneous aliphatic dicarboxylic acid suspension.

In some embodiments, the aliphatic dicarboxylic acid suspension in the suspension storage tank 15 is circulated through the circulation pipeline 151 of the suspension storage tank to ensure that the aliphatic dicarboxylic acid suspension remains in a homogeneous state. During circulation, the online densimeter 152 is configured for monitoring and providing real-time feedback on the concentration changes of the aliphatic dicarboxylic acid suspension, enabling precise control of the amount used when preparing the primary nylon salt.

In some embodiments, a concentration of the aliphatic dicarboxylic acid suspension is in a range of 35 wt% to 52 wt%. Using the preparation process of the preparation equipment in the present application, the concentration fluctuation is less than 0.1 wt%, or even less than 0.05 wt%.

In some embodiments, the aliphatic dicarboxylic acid is selected from C4-C12 dicarboxylic acids, such as succinic acid, glutaric acid, adipic acid, pimelic acid, suberic acid, azelaic acid, sebacic acid, dodecanedioic acid, etc.

When the aliphatic dicarboxylic acid suspension is transferred to the first salt formation reactor 16, the diamine is added to the first salt formation reactor 16 through the first diamine feed pipe 161 to form the primary nylon salt solution. In some embodiments, the concentration of the aliphatic dicarboxylic acid suspension is monitored and fed back in real time by the online densimeter 152, and the feed amount is controlled according to the molar ratio requirement of the dicarboxylic acid to the diamine in the primary nylon salt solution. In some embodiments, the molar ratio of the dicarboxylic acid to the diamine in the primary nylon salt solution is in a range of 1.5:1 to 3:1, and the concentration of the primary nylon salt solution is in a range of 40 wt% to 62 wt%. In some embodiments, the molar ratio of the dicarboxylic acid to the diamine is in a range of 2:1 to 2.5:1, and the concentration of the primary nylon salt solution is in a range of 50 wt% to 60 wt%.

In some embodiments, the primary nylon salt solution in the first salt formation reactor 16 is circulated through the circulation pipeline 163 of the first salt formation reactor, and the temperature is controlled in a range of 50°C to 80°C by the first heat exchanger 164.

Then, the primary nylon salt solution in the first salt formation reactor 16 is transferred to the primary nylon salt storage tank 17 or directly to the second salt formation reactor 18. When the primary nylon salt solution is transferred to the second salt formation reactor 18, the diamine is added to the second salt formation reactor 18 through the second diamine feed pipe 181 and the third diamine feed pipe 182 to form the nylon salt solution. The nylon salt solution is directly fed into the polyamide production process or transferred to the nylon salt storage tank 19.

In some embodiments, the total feed amount of the diamine in the second diamine feed pipe 181 and the third diamine feed pipe 182 is controlled according to the final required concentration of the nylon salt solution and the molar ratio of the dicarboxylic acid to the diamine. Among them, the feed amount of the diamine in the third diamine feed pipe 182 is regulated by the online near-infrared monitoring equipment 185 on the circulation pipeline 184 of the second salt formation reactor. In some embodiments, the concentration of the nylon salt solution is in a range of 50 wt% to 65 wt%.

In some embodiments, the nylon salt solution in the second salt formation reactor 18 is circulated through the circulation pipeline 184 of the second salt formation reactor, and the temperature is controlled in a range of 60°C to 110°C by the second heat exchanger 186.

In some embodiments, the diamine in the present application broadly refer to C4 to C12 diamines in the art, such as 1,4-butylenediamine, 1,5-pentenediamine, 1,6-hexamethylenediamine, 1,7-heptamethylenediamine, 1,8-octamethylenediamine, 1,9-nonamethylenediamine, and 1,10-decamethylenediamine, laurel lamina, etc.

Hereinafter, the preparation equipment and process for the nylon salt solution will be further illustrated through specific examples.

### Example 1

Ton-bagged adipic acid was hoisted to the bag-opening position using the electric hoist of the feeding unit 11. Simultaneously, 1500 kg of pure water was injected into the mixing reactor 14, and the high-shear pump 13 was activated to initiate the circulation of pure water between the high-shear pump 13 and the mixing reactor 14. After the circulation was established, the ton-bagged adipic acid was opened and fed into the high-shear pump 13 through the continuous feeding unit 12. The feeding process was completed within 6 minutes, and the adipic acid was mixed with water, circulating between the high-shear pump 13 and the mixing reactor 14 to obtain the adipic acid suspension, which was then stored in the suspension storage tank 15. The concentration, as measured by the online densimeter 152, was 39.9 wt%.

A total of 1577 kg of the 39.9 wt% adipic acid suspension was measured and transferred to the first salt formation reactor 16. Then, 200 kg of hexamethylenediamine was measured and added to the first salt formation reactor 16 through the first diamine feed pipe 161. The primary nylon salt solution was prepared in the first salt formation reactor 16, and its temperature was controlled at 65°C using the first heat exchanger 164, with a concentration of 52.5 wt%. Offline sampling tests showed that the amine-to-acid ratio of the primary nylon salt solution was 1:2.49, and the calculated measurement error of adipic acid was 0.39%.

### Comparative Example 1

Adipic acid was measured at 1000 kg using the loss-in-weight feeder, and the weight loss signal was simultaneously fed back to measure 317.8 kg of hexamethylenediamine and 1192 kg of water. The hexamethylenediamine and water were measured proportionally to obtain a primary nylon salt solution with an amine-to-acid ratio of 1:2.5 and a concentration of 52.5 wt%. 1000 kg of adipic acid was fed in three batches, meaning there were three volume-based working modes. The temperature of the primary nylon salt solution was controlled at 65°C using a heat exchanger. Offline sampling tests showed that the amine-to-acid ratio of the primary nylon salt solution was 1:2.45, and the calculated measurement error of adipic acid was 2%.

From Example 1 and Comparative Example 1, it can be seen that using the preparation equipment and process of the present application to form the primary nylon salt solution from the adipic acid suspension results in a closer approximation to the target amine-to-acid ratio, meaning the measurement accuracy of adipic acid is significantly higher.

### Example 2

The primary nylon salt solution with a continuous amine-to-acid ratio of 1:2.5 and a concentration of 55 wt% was fed into the second salt formation reactor 18 at a flow rate of 1000 kg/h. Simultaneously, hexamethylenediamine was fed through the second diamine feed pipe 181 at a flow rate of 122.8 kg/h, and pure water was fed at a flow rate of 47 kg/h. In the second salt formation reactor 18, the nylon salt solution with an amine-to-acid ratio of 1:1 and a concentration of 60 wt% was prepared. The hexamethylenediamine in the third diamine feed pipe 182 was feedback-controlled and supplemented using the non-contact online near-infrared monitoring equipment to achieve the desired nylon salt solution with an amine-to-acid ratio of 1:1 and a concentration of 60 wt%. After the preparation began, offline samples were taken every hour. The sampled nylon salt solution was diluted to 10 wt% and cooled to 25°C to test the amine-to-acid ratio. The monitoring results are shown in Table 1.

### Comparative Example 2

The difference between Comparative Example 2 and Example 2 lies in the fact that the hexamethylenediamine in the third diamine feed pipe was controlled through a bypass pipeline provided with a flow meter and a regulating valve. A salt solution of 50 kg/h was taken, and an equivalent proportion of pure water was added to dilute the solution from 60 wt% to approximately 10 wt%. The temperature was controlled at 25±1°C using a heat exchanger. An online pH meter was installed after the heat exchanger to monitor the pH of the diluted and cooled salt solution, and the flow rate of hexamethylenediamine in the third diamine feed pipe was adjusted based on feedback from the laboratory model. After the preparation began, offline samples were taken every hour. The sampled salt solution was diluted to 10 wt% and cooled to 25°C to test the amine-to-acid ratio. The monitoring results are shown in Table 1.

| Table 1 | 1h | 2h | 3h | 4h | 5h | 6h |
|---|---|---|---|---|---|---|
| Example 2 | 1.0009 | 1.0004 | 1.0002 | 1.0004 | 1.0001 | 1.0003 |
| Comparative Example 2 | 1.0016 | 1.0015 | 1.0011 | 1.0010 | 0.9991 | 1.0011 |

As shown in Table 1, the use of the online near-infrared monitoring equipment in the present application to adjust the hexamethylenediamine in the third diamine feed pipe results in smaller fluctuations in the expected amine-to-acid ratio. In contrast, online pH monitoring is significantly affected by fluctuations in dilution concentration, measurement temperature, and other uncontrollable factors, leading to greater data fluctuations. Deviations in the amine-to-acid ratio are detrimental to subsequent polymerization, particularly in controlling the end groups of the final product, which has a significant impact on downstream applications, such as in the spinning field.

Compared to related technologies, the present application has the following beneficial effects. Firstly, the aliphatic dicarboxylic acid is directly fed by weight measurement, enabling precise control of the feed amount. Secondly, when using the suspension preparation device of the present application to form the aliphatic dicarboxylic acid suspension, the high-shear pump generates a slight negative pressure during material circulation, creating a vacuum suction state. This allows the aliphatic dicarboxylic acid to be rapidly and completely dispersed into the suspension. Additionally, the high-shear pump atomizes water into a fine mist. As a result, the suspension preparation device of the present application prevents clumping of the aliphatic dicarboxylic acid powder and ensures rapid contact between water and the aliphatic dicarboxylic acid powder, forming an ideal and homogeneous dispersion. Thirdly, the online near-infrared monitoring equipment used in the present application monitors the molar ratio of the dicarboxylic acid and the diamine in the nylon salt solution, avoiding concentration issues caused by adding extra water for sampling. Moreover, the online near-infrared monitoring equipment can stably measure within a temperature range of -10°C to 10°C. Therefore, the nylon salt solution obtained using the preparation equipment and process of the present application achieves a more precise molar ratio of the dicarboxylic acid to the diamine.

The technical features of the above-mentioned embodiments can be combined arbitrarily. In order to make the description concise, not all possible combinations of the technical features are described in the embodiments. However, as long as there is no contradiction in the combination of these technical features, the combinations should be considered as in the scope of the present application.

The above embodiments only express several embodiments of the present application, and their descriptions are more specific and detailed, but they cannot be construed as limitations on the scope of the present application. It should be noted that for one skilled in the art, without deviating from the concept of the present application, a number of deformation and improvement can be made, which are within the scope of protection of the present application. Therefore, the scope of protection of the present application shall be governed by the claims.

## Claims

1. A preparation equipment for a nylon salt solution, comprising:
a suspension preparation device (10), wherein the suspension preparation device (10) comprises a feeding unit (11), a continuous feeding unit (12), a high-shear pump (13), and a mixing reactor (14) provided with a water inlet pipe (141), which are sequentially connected with and in communication with each other; the high-shear pump (13) and the mixing reactor (14) are cyclically connected with and in communication with each other through two connecting pipelines; the feeding unit (11) is configured for feeding an aliphatic dicarboxylic acid, and the continuous feeding unit (12) is configured for conveying the aliphatic dicarboxylic acid to the high-shear pump (13), such that the aliphatic dicarboxylic acid is capable of circulating with a water between the high-shear pump (13) and the mixing reactor (14) to form an aliphatic dicarboxylic acid suspension;
a first salt formation reactor (16) connected to and in communication with the suspension preparation device (10), wherein the first salt formation reactor (16) comprises a first diamine feed pipe (161), the first salt formation reactor (16) is configured for preparing a primary nylon salt solution by reacting the aliphatic dicarboxylic acid suspension with a diamine; and
a second salt formation reactor (18) connected to and in communication with the first salt formation reactor (16), wherein the second salt formation reactor (18) comprises a second diamine feed pipe (181) and a third diamine feed pipe (182), the second salt formation reactor (18) is configured for preparing a nylon salt solution by reacting the primary nylon salt solution with the diamine; the second salt formation reactor (18) further comprises a circulation pipeline (184) of the second salt formation reactor, and the circulation pipeline (184) of the second salt formation reactor is provided with an online near-infrared monitoring equipment (185), which is configured for monitoring a molar ratio of the aliphatic dicarboxylic acid to the diamine in the nylon salt solution and controlling a feed amount of the diamine in the third diamine feed pipe (182) based on monitoring results.

2. The preparation equipment of claim 1, further comprising a suspension storage tank (15) connected to and in communication with the suspension preparation device (10), wherein the suspension storage tank (15) is configured for storing the aliphatic dicarboxylic acid suspension prepared by the suspension preparation device (10); the first salt formation reactor (16) is connected to and in communication with the suspension storage tank (15);
and/or,
the preparation equipment further comprises a primary nylon salt storage tank (17) connected to and in communication with the first salt formation reactor (16), and the primary nylon salt storage tank (17) is configured for storing the primary nylon salt solution prepared by the first salt formation reactor (16); the second salt formation reactor (18) is connected to and in communication with the primary nylon salt storage tank (17);
and/or,
the preparation equipment further comprises a nylon salt storage tank (19) connected to and in communication with the second salt formation reactor (18), and the nylon salt storage tank (19) is configured for storing the nylon salt solution prepared by the second salt formation reactor (18).

3. The preparation equipment of claim 2, wherein the number of the suspension preparation device (10) is one or more than two, and each of the suspension preparation device (10) is connected to and in communication with the suspension storage tank (15).

4. The preparation equipment of claim 2, wherein the suspension storage tank (15) comprises a circulation pipeline (151) of the suspension storage tank, which is configured for circulating the aliphatic dicarboxylic acid suspension in the suspension storage tank (15);
and/or, the primary nylon salt storage tank (17) comprises a circulation pipeline (171) of the primary nylon salt storage tank, which is configured for circulating the primary nylon salt solution in the primary nylon salt storage tank (17);
and/or, the first salt formation reactor (16) comprises a circulation pipeline (163) of the first salt formation reactor, which is configured for circulating the primary nylon salt solution in the first salt formation reactor (16).

5. The preparation equipment of claim 4, wherein the circulation pipeline (151) of the suspension storage tank is provided with an online densimeter (152), which is configured for monitoring and feeding back the concentration change of the aliphatic dicarboxylic acid suspension in real time.

6. The preparation equipment of claim 4, wherein the circulating pipeline (163) of the first salt formation reactor is provided with a first heat exchanger (164);
and/or, the circulation pipeline (184) of the second salt formation reactor is provided with a second heat exchanger (186).

7. The preparation equipment of claim 1, wherein the online near-infrared monitoring equipment (185) is a non-contact online near-infrared monitoring equipment.

8. A preparation process for a nylon salt solution, which is carried out by using the preparation equipment of anyone of claims 1 to 7, comprising the following steps:
introducing the water into the mixing reactor (14) through the water inlet pipe (141), and starting the high-shear pump (13) to circulate the water between the mixing reactor (14) and the high-shear pump (13);
feeding the aliphatic dicarboxylic acid through the feeding unit (11), and entering the high-shear pump (13) through the continuous feeding unit (12) to mix with the water, and circulating between the high-shear pump (13) and the mixing reactor (14) to form an aliphatic dicarboxylic acid suspension;
transferring the aliphatic dicarboxylic acid suspension to the first salt formation reactor (16), and adding the diamine into the first salt formation reactor (16) through the first diamine feed pipe (161) to form a primary nylon salt solution; and
transferring the primary nylon salt solution to the second salt formation reactor (18), and adding the diamine into the second salt formation reactor (18) through the second diamine feed pipe (181) and the third diamine feed pipe (182) to form a nylon salt solution, wherein a feed quantity of the diamine of the third diamine feed pipe (182) is controlled by the online near-infrared monitoring equipment (185) on the circulation pipeline (184) of the second salt formation reactor.

9. The preparation process of claim 8, wherein transferring the aliphatic dicarboxylic acid suspension to the first salt formation reactor (16) further comprises: transferring the aliphatic dicarboxylic acid suspension prepared by the suspension preparation device (10) to the suspension storage tank (15), then transferring the aliphatic dicarboxylic acid suspension in the suspension storage tank (15) to the first salt formation reactor (16);
and/or, further comprising: transferring the primary nylon salt solution to the second salt formation reactor (18) further comprises: transferring the primary nylon salt solution prepared by the first salt formation reactor (16) to the primary nylon salt storage tank (17), then transferring the primary nylon salt solution in the primary nylon salt storage tank (17) to the second salt formation reactor (18);
and/or, further comprising: transferring the nylon salt solution prepared by the second salt formation reactor (18) to the nylon salt storage tank (19).

10. The preparation process of claims 8 or 9, wherein the preparation process satisfies at least one of the following conditions:
(1) a concentration of the aliphatic dicarboxylic acid suspension is in a range of 35 wt% to 52 wt%;
(2) a molar ratio of a dicarboxylic acid to the diamine in the primary nylon salt solution is in a range of 1.5:1 to 3:1, and a concentration of the primary nylon salt solution is in a range of 40 wt% to 62 wt%;
(3) a concentration of the nylon salt solution is in a range of 50 wt% to 65 wt%.
